# EUROPÄISCHE PATENTSCHRIFT

(11) **EP 1 888 398 B1**
(45) Veröffentlichungstag und Bekanntmachung des Hinweises auf die Patenterteilung: **07.07.2010**
(21) Anmeldenummer: 06753506.2
(22) Anmeldetag: 06.05.2006
(51) Int. Cl.: B62J 9/00

(54) **GEPÄCKBEHÄLTER FÜR EIN MOTORRAD**
LUGGAGE CONTAINER FOR A MOTORBIKE
CONTENANT A BAGAGES DESTINE A UNE MOTO

(30) Priorität: 07.06.2005 DE 102005026053; 07.07.2005 DE 102005031716
(43) Veröffentlichungstag der Anmeldung: 20.02.2008
(73) Patentinhaber: Bayerische Motoren Werke Aktiengesellschaft, 80809 München (DE)
(72) Erfinder: REHSCHUH, Rainer, 84072 Au (DE)
(86) Internationale Anmeldenummer: PCT/EP2006/004248
(87) Internationale Veröffentlichungsnummer: WO 2006/131180

(56) Entgegenhaltungen:
- "Honda Originalzubehör 2001" 2001, HONDA MOTOR EUROPE , OFFENBACH , XP002396604 Seite 3 Seite 5

## Beschreibung

Die vorliegende Erfindung betrifft einen Gepäckbehälter für ein Motorrad gemäß dem Oberbegriff des Patentanspruches 1.

Ein derartiger Gepäckbehälter, der den nächsten Stand der Technik darstellt, ist aus "HONDA Originalzubehör 2001" 2001 Honda Motor Europe, Offenbach, XP 002396604 bekannt.

Bei vielen Motorrädern neigt der Heckbereich des Motorrads zu relativ starker Verschmutzung. Vor allem bei Motorrädern, die mit Seitenkoffern bzw. mit einem Topcase ausgerüstet sind, entsteht im Bereich der Rückleuchten, Blinker und des Kennzeichens bei höheren Geschwindigkeiten ein starker Unterdruck, der Schmutzpartikel aus der Luft ansaugt. Die Schmutzpartikel lagern sich auf den Scheinwerfern, Blinkern, dem Kennzeichen sowie auf dem Motorrad bzw. auf der Rückseite des Topcase und der Seitenkoffer ab.

Aufgabe der Erfindung ist es, einen Gepäckbehälter zu schaffen, mit dem sich das Verschmutzungsproblem verringern lässt.

Diese Aufgabe wird durch die Merkmale des Patentanspruches 1 gelöst. Vorteilhafte Ausgestaltungen und Weiterbildungen der Erfindung sind den Unteransprüchen zu entnehmen.
Die Erfindung geht von einem Gepäckbehälter für ein Motorrad aus. Bei dem Gepäckbehälter kann es sich beispielsweise um ein Topcase handeln, das hinten im Bereich der Gepäckbrücke eines Motorrads von oben auf dem Motorrad befestigt wird, oder um einen Seitenkoffer, der seitlich im Bereich des Hinterrads am Motorrad befestigt wird. Der Gepäckbehälter weist eine Innenwand auf, die wenn der Gepäckbehälter am Motorrad befestigt ist, dem Motorrad zugewandt ist. Bei einem Topcase entspricht die Innenwand dem Boden des Topcase. Bei einem Seitenkoffer entspricht die Innenwand der dem Motorrad zugewandten Seitenwand des Seitenkoffers. Der Gepäckbehälter weist ferner eine Außenwand auf. Die Außenwand ist diejenige Wandung des Gepäckbehälters, die der Innenwand gegenüberliegt. Darüber hinaus weist der Gepäckbehälter eine Vorderwand auf, die, wenn der Gepäckbehälter am Motorrad befestigt ist, einem vorderen Bereich des Motorrads zugewandt ist. Eine Rückwand des Gepäckbehälters ist, wenn der Gepäckbehälter am Motorrad befestigt ist, einem hinteren Bereich des Motorrads zugewandt. Die Rückwand liegt also der Vorderwand "gegenüber". Zwischen der Innenwand und der Außenwand bzw. zwischen der Vorderwand und der Rückwand erstrecken sich jeweils eine Seitenwand.

Der Kern einer bevorzugten Ausführungsform der Erfindung gemäß Patentanspruch 1 besteht darin, dass in einem Übergangsbereich zwischen der Außenwand und der Rückwand ein Luftleitelement angeordnet ist, das Fahrtwind, der an der Außenwand entlang streicht, in eine vorgegebene Richtung lenkt, derart, dass die Verschmutzung der Rückwand des Gepäckbehälters sowie des gesamten rückwärtigen Bereichs des Motorrads minimiert wird.

Vorzugsweise ist das Luftleitelement derart gestaltet und derart angeordnet, dass es den an der Außenseite entlangstreichenden Fahrtwind zur Rückwand hin lenkt. Das Luftleitelement verringert also gezielt den Unterdruck im gesamten rückwärtigen Bereich des Motorrads.

Nach einer Weiterbildung der Erfindung ist der Übergangsbereich zwischen der Außenwand und der Rückwand des Gepäckbehälters konvex gekrümmt. Dadurch verbessert sich die Umlenkung des Fahrtwinds zur Rückwand des Gepäckbehälters hin.

Das Luftleitelement kann in einem vorgegebenen Abstand von den den Übergangsbereich bildenden Wandabschnitten des Gepäckbehälters angeordnet sein, ähnlich wie dies bei flügelartigen Heckspoilern von Pkw der Fall ist. Das Luftleitelement hat vorzugsweise einen tragflügelartig bzw. lamellenartig gekrümmten Querschnitt.

Vorzugsweise ist der Krümmungsradius des Übergangsbereichs zwischen der Außenwand und der Rückwand des Gepäckbehälters im wesentlichen gleich dem Krümmungsradius des Luftleitelements bzw. der Mittellinie des Luftleitelements.

Ausdrücklich sie darauf hingewiesen, dass auch mehrere derartige Luftleitelement an dem Gepäckbehälter vorgesehen sein können. Die Luftleitelemente können übereinander und eventuell in Fahrtrichtung des Motorrads leicht versetzt zueinander angeordnet sein, wodurch sich die Umlenkung des Fahrtwinds weiter verbessert.

Zur Befestigung des Luftleitelements können an dem Gepäckbehälter Haltewangen bzw. Haltenasen angeordnet sein. So kann beispielsweise in einem Übergangsbereich zwischen der einen Seitenwand und der Außenwand des Gepäckbehälters ein erstes von der Außenwand abstehendes Halteelement vorgesehen sein und in einem Übergangsbereich zwischen der anderen Seitenwand und der Außenwand ein zweites von der Außenwand abstehendes Halteelement vorgesehen sein. Die beiden Enden des Luftleitelements sind an den Halteelementen befestigt. Das Luftleitelement, die Halteelemente und der Gepäckbehälter können einstückig miteinander verbunden sein. Ein Teil des Gepäckbehälters, die Halteelemente und das Luftleitelement können beispielsweise als Spritzgussteil hergestellt sein. Alternativ dazu können die Halteelemente und das Luftleitelement auch an den Gepäckbehälter angeklebt, angeschraubt oder in sonstiger Weise daran befestigt sein.

Die von der Außenwand abstehenden "Halteelemente" haben nicht nur die Funktion eines Halteelements im eigentlichen Sinne, sondern auch die Funktion von Luftleitelementen. Sie stellen nämlich sicher, dass der zwischen ihnen strömende Fahrtwind nicht seitlich aus dem von ihnen gebildeten "Schacht" ausweichen kann. Sie "kanalisieren" also den an der Außenseite entlangstreichenden Fahrtwind zur Rückwand hin.

Vorzugsweise ist die Außenwand des Gepäckbehälters in Bezug auf die Innenwand so angeordnet, dass die Außenwand zur Rückwand hin leicht abfällt. "Leicht" bedeutet in diesem Zusammenhang gerade soviel, dass dass Verwirbelungen der Luft vermieden und eine weitgehend laminare Luftströmung erreicht wird.

Ferner kann vorgesehen sein, dass das Luftleitelement schwenkbar angeordnet ist.

Vorzugsweise ist das Luftleitelement so angeordnet, dass sich der durch die Außenwand, die beiden "seitlichen" Halteelemente und das Luftleitelement gebildete Strömungsquerschnitt in Strömungsrichtung der Luft, d.h. zur Rückwand hin verjüngt. Dadurch wird erreicht, dass die Luft "unter" dem Luftleitelement zusätzlich beschleunigt wird, was die Verschmutzungsgefahr der Rückwand weiter verringert.

Die zuvor erwähnten von der Außenwand abstehenden "Halteelemente", welche die Funktion von Luftleitelementen haben bilden in Kombination mit der "abfallenden Außenwand" die Kernidee einer kostengünstigen Ausführungsform der Erfindung gemäß Patentanspruch 12. Allein durch die von der Außenwand abstehenden "Halteelemente" eine zur Rückwand hin leicht abfallenden Außenwand kann die Verschmutzung der Rückwand bereits sehr beträchtlich verringert werden und zwar ohne dass notwendigerweise ein Luftleitelement vorgesehen sein muss.

Im folgenden wird die Erfindung im Zusammenhang mit der Zeichnung näher erläutert. Es zeigen:
- Figur 1: eine rückwärtige Ansicht eines Motorrads, das mit einem Top- case und zwei Seitenkoffern ausgerüstet ist;
- Figur 2: eine vergrößerte Darstellung des linken Seitenkoffers im Be- reich des Luftleitelements und
- Figur 3: ein perspektivische Darstellung eines Topcase gemäß der Er- findung.

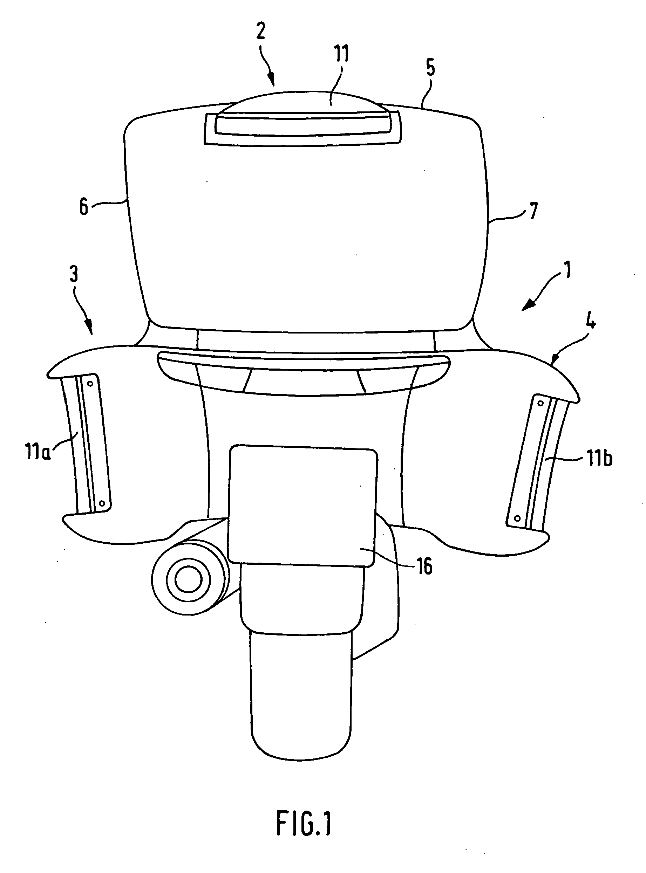

Figur 1 zeigt eine rückwärtige Ansicht eines Motorrads 1, das mit einem Topcase 2, einem linken Seitenkoffer 3 und einem rechten Seitenkoffer 4 ausgerüstet ist. Das Topcase 2 ist auf einer oberhalb des Hinterrads des Motorrads angeordneten Gepäckbrücke befestigt. Die beiden Seitenkoffer 3, 4 sind seitlich im Bereich des Hinterrads des Motorrads am Motorrad befestigt.

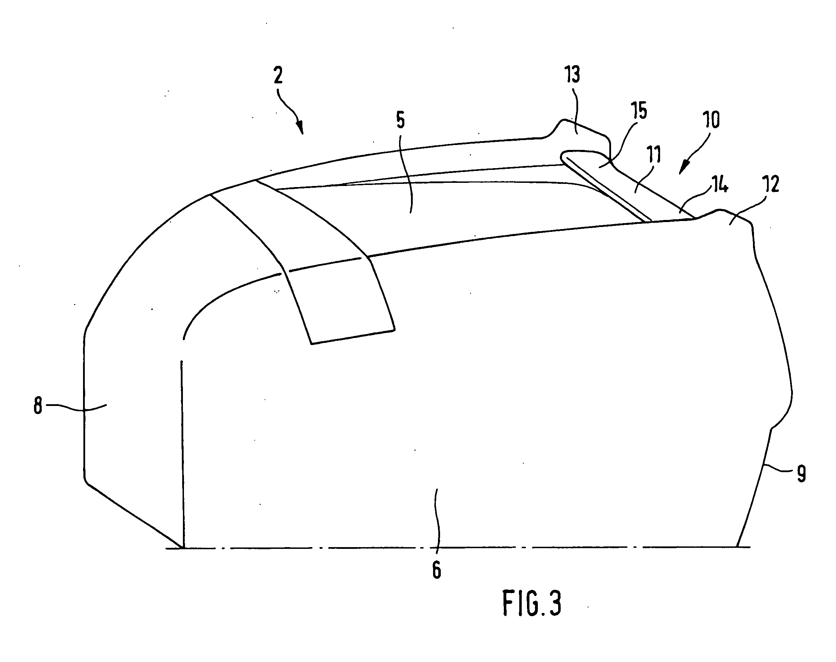

Das Topcase 2 ist mit seiner Unter- bzw. Bodenseite an der Gepäckbrücke befestigt. Die Oberseite des Topcase 2 wird im folgenden auch als Außenwand 5 (vgl. Figur 3) bezeichnet. Die Oberseite bzw. Außenwand 5 des Topcase 2 ist über Seitenwände 6, 7 mit der Unter- bzw. Bodenwand des Topcase 2 verbunden. Das Topcase 2 weist ferner, wie am besten aus Figur 3 ersichtlich ist, eine Vorderwand 8 und eine Rückwand 9 auf. Die Vorderwand 8 ist, wenn das Topcase 2 am Motorrad 1 befestigt ist, einem vorderen Bereich des Motorrads zugewandt. Die Rückwand 9 ist, wenn das Topcase am Motorrad 1 befestigt ist, einem hinteren Bereich des Motorrads zugewandt. In einem Übergangsbereich 10 (vgl. Figur 3) zwischen der Außenwand 5 und der Rückwand 9 des Topcase 2 ist ein Luftleitelement 11 angeordnet.

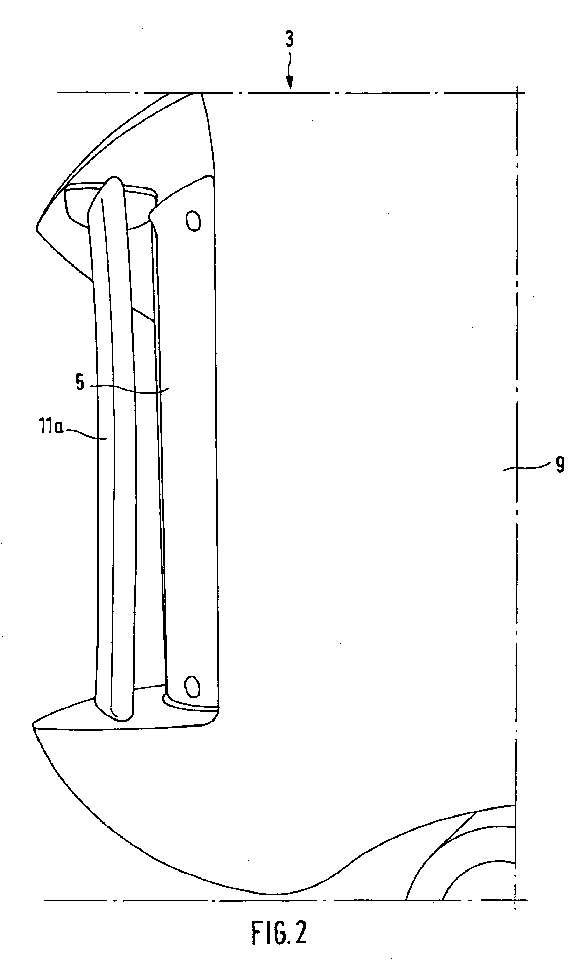

Wie am besten aus Figur 2 ersichtlich ist, hat das Luftleitelement eine lamellenartige bzw. tragflügelartige Form. Das Luftleitelement 11 ist dazu vorgesehen, Fahrtwind, der an der Außenwand 5, d. h. an der Oberseite des Topcase 2 entlang streicht, nach unten zur Rückseite 9 des Topcase 2 hin umzulenken. Dadurch verringert sich während der Fahrt der Unterdruck im Bereich hinter dem Topcase 2 und somit auch die Gefahr, dass der Heckbereich des Motorrads 2 bzw. des Topcase 2 und der Seitenkoffer 3, 4 verschmutzt.

Wie aus Figur 3 ersichtlich ist, ist im hinteren Übergangsbereich der Seitenwand 6 und der Außenwand 5 des Topcase 2 ein erstes nasenartiges Halteelement 12 vorgesehen. Ein solches nasenartiges Halteelement ist auch im rechten hinteren Übergangsbereich der in Figur 3 verdeckten Seitenwand und der Außenwand 5 vorgesehen. Dieses zweite nasenartige Halteelement ist mit dem Bezugszeichen 13 gekennzeichnet. Die beiden Enden 14, 15 des Luftleitelements sind jeweils an einem der beiden Halteelemente 12 bzw. 13 befestigt. Das Luftleitelement 11 kann schwenkbar an den beiden Halteelementen 12, 13 angeordnet sein oder fest mit den Halteelementen 12, 13 verbunden sein. Die Halteelemente 12, 13 können einstückig mit dem Topcase verbunden sein. Beispielsweise können die Halteelemente 12, 13 und ein Deckel des Topcase 2 als Spritzgussteil hergestellt sein. Alternativ dazu können die Halteelemente 12, 13 auch nachträglich an den Deckelbereich des Topcase 2 angeklebt, angeschraubt oder in sonstiger Weise daran befestigt sein.

Wie aus Figur 1 ersichtlich ist, sind auch die beiden Seitenkoffer 3, 4 mit einem derartigen Luftleitelement 11a, 11b versehen. Die Luftleitelemente 11a, 11b dienen ebenfalls dazu, Fahrtwind, der an den Außenseiten der Seitenkoffer entlang streicht, in den Heckbereich des Motorrads, oder genauer gesagt, zu den Rückseiten der Seitenkoffer bzw. in dem Bereich des Kennzeichens 16 des Motorrads 1 hin umzuleiten.

Figur 2 zeigt eine vergrößerte Darstellung des linken Seitenkoffers 3 im Bereich des Luftleitelements 11a. Aus Figur 2 ist besonders deutlich zu sehen, dass der Übergangsbereich zwischen der Außenwand 5 und der Rückwand 9 des Seitenkoffers gerundet bzw. konvex gekrümmt ist, wodurch sich die Luftumlenkung durch das Luftleitelement 11a weiter verbessert.

## Patentansprüche

1. Gepäckbehälter (1- 3) für ein Motorrad (1), wobei der Gepäckbehälter (1 - 3) Wandungen aufweist, nämlich
- eine Innenwand, die, wenn der Gepäckbehälter (1 - 3) am Motorrad (1) befestigt ist, dem Motorrad (1) zugewandt ist,
- eine von der Innenwand beabstandete Außenwand (5),
- eine Vorderwand (8), die, wenn der Gepäckbehälter am Motorrad (1) befestigt ist, einem vorderen Bereich des Motorrads zugewandt ist,
- eine Rückwand (9), die, wenn der Gepäckbehälter (1 - 3) am Motorrad (1) befestigt ist, einem hinteren Bereich des Motorrads (1) zugewandt ist, und
- zwei sich jeweils zwischen der Innenwand und der Außenwand (5) erstreckende Seitenwände (6), wobei
in einem Übergangsbereich (10) zwischen der Außenwand (5) und der Rückwand (9) ein Luftleitelement (11) angeordnet ist,
**dadurch gekennzeichnet, dass**
das Luftleitelement (11) Fahrtwind, der an der Außenwand (5) entlangstreicht, in eine vorgegebene Richtung lenkt und derart gestaltet und angeordnet ist, dass es den Fahrtwind zur Rückwand (9) hin lenkt.

2. Gepäckbehälter (1 - 3) nach Anspruch 1, **dadurch gekennzeichnet, dass** der Übergangsbereich (10) zwischen der Außenwand (5) und der Rückwand (9) konvex gekrümmt ist.

3. Gepäckbehälter (1 - 3) nach einem der Ansprüche 1 oder 2, **dadurch gekennzeichnet, dass** das Luftleitelement (11) in einem Abstand von den den Übergangsbereich (10) bildenden Wandabschnitten (5 - 9) des Gepäckbehälters (1 - 3) angeordnet ist.

4. Gepäckbehälter (1 - 3) nach einem der Ansprüche 1 bis 3, **dadurch gekennzeichnet, dass** das Luftleitelement (11) einen lamellenförmigen Querschnitt hat.

5. Gepäckbehälter (1 - 3) nach einem der Ansprüche 1 bis 4, **dadurch gekennzeichnet, dass** das Luftleitelement (11) eine lamellenartig bzw. tragflügelartig gekrümmte konkave Innenseite aufweist, wobei die konkave Innenseite dem Übergangsbereich (10) des Gepäckbehälters (1 - 3) zugewandt ist.

6. Gepäckbehälter (1- 3) nach einem der Ansprüche 1 bis 5, **dadurch gekennzeichnet, dass** in einem Übergangsbereich zwischen der einen Seitenwand (6) und der Außenwand (5) ein erstes von der Außenwand (5) abstehendes Halteelement (12) vorgesehen ist, und in einem Übergangsbereich zwischen der anderen Seitenwand und der Außenwand (5) ein zweites von der Außenwand (5) abstehendes Halteelement (13) vorgesehen ist, wobei Enden (14, 15) des Luftleitelements (11) an den beiden Halteelementen (12-13) befestigt sind.

7. Gepäckbehälter (1- 3) nach einem der Ansprüche 1 bis 6, **dadurch gekennzeichnet, dass** der Gepäckbehälter ein Topcase (2) ist.

8. Gepäckbehälter (1- 3) nach einem der Ansprüche 1 bis 6, **dadurch gekennzeichnet, dass** der Gepäckbehälter ein Seitenkoffer (3, 4) ist, wobei die Seitenwände des Gepäckbehälters eine obere bzw. eine untere Wand des Seitenkoffers bilden.

9. Gepäckbehälter (1- 3) nach einem der Ansprüche 1 bis 8, **dadurch gekennzeichnet, dass** die Außenwand (5) in Bezug zur Innenwand zur Rückwand (9) hin abfällt.

10. Gepäckbehälter (1 - 3) nach einem der Anspruch 9, **dadurch gekennzeichnet, dass** die Außenwand (5) in Bezug zur Innenwand zur Rückwand (9) in einem Winkel abfällt, der im Bereich zwischen 7° und 15° liegt.

11. Gepäckbehälter (1 - 3) für ein Motorrad (1) nach einem der Ansprüche 1 bis 10, **dadurch gekennzeichnet, dass** in einem Übergangsbereich zwischen der einen Seitenwand (6) und der Außenwand (5) ein erstes von der Außenwand (5) abstehendes Luftleitelement (12) vorgesehen ist, und in einem Übergangsbereich zwischen der anderen Seitenwand und der Außenwand (5) ein zweites von der Außenwand (5) abstehendes Luftleitelement (13) vorgesehen ist, wobei Enden (14, 15) des Luftleitelements (11) an den beiden Halteelementen (12-13) befestigt sind und dass die Außenwand (5) in Bezug zur Innenwand zur Rückwand (9) hin abfällt.

12. Motorrad mit einem Gepäckbehälter (1 **-** 3) nach einem der Ansprüche 1 bis 11.

## Claims

1. A luggage container (1-3) for a motorcycle (1), wherein the luggage container (1-3) has walls, that is to say
- an inner wall which faces the motorcycle (1) when the luggage container (1-3) is fastened to the motorcycle,
- an outer wall (5) at a distance from the inner wall,
- a front wall (8) which faces a front region of the motorcycle when the luggage container is fastened to the motorcycle (1),
- a rear wall (9) which faces a rear region of the motorcycle (1) when the luggage container (1-3) is fastened to the motorcycle, and
- two side walls (6) extending between the inner wall and the outer wall (5), wherein
an air pipe element (11) is disposed in a transition region (10) between the outer wall (5) and the rear wall (9),
**characterised in that** the air pipe element (11) directs the head wind along the outer wall (5) in a set direction and is designed and disposed so that it directs the head wind towards the rear wall (9).

2. A luggage container (1-3) according to claim 1, **characterised in that** the transition region (10) between the outer wall (5) and the inner wall (9) is convex.

3. A luggage container (1-3) according to claim 1 or 2, **characterised in that** the air pipe element (11) is disposed at a distance from the wall portions (5-9) of the luggage container (1-3) which form the transition region (10).

4. A luggage container (1-3) according to any of claims 1 to 3, **characterised in that** the air pipe element (11) has a lamellar cross-section.

5. A luggage container (1-3) according to any of claims 1 to 4, **characterised in that** the air guide element (11) has a lamellar or aerofoil-like curved concave inner side, wherein the concave inner side faces the transition region (10) of the luggage container (1-3).

6. A luggage container (1-3) according to any of claims 1 to 5, **characterised in that** a first retaining element (12) projecting from the outer wall (5) is provided in a transition region between one side wall (6) and the outer wall (5), and a second retaining element (13) projecting from the outer wall (5) is provided in a transition region between the other side wall and the outer wall (5), wherein ends (14, 15) of the air pipe element (11) are fastened to the two retaining elements (12-13).

7. A luggage container (1-3) according to any of claims 1 to 6, **characterised in that** the luggage container is a top case (2).

8. A luggage container (1-3) according to any of claims 1 to 6, **characterised in that** the luggage container is a side case (3, 4), wherein the side walls of the luggage container form a top and/or a bottom wall of the side case.

9. A luggage container (1-3) according to any of claims 1 to 8, **characterised in that** the outer wall (5), relative to the inner wall, slopes down towards the rear wall (9).

10. A luggage container (1-3) according to claim 9, **characterised in that** the outer wall (5), relative to the inner wall, slopes down towards the rear wall (9) at an angle in the range between 7° and 15°.

11. A luggage container (1-3) for a motor cycle (1) according to any of claims 1 to 10, **characterised in that** a first air pipe element (12) projecting from the outer wall (5) is provided in a transition region between one side wall (6) and the outer wall (5) and a second air pipe element (13) projecting from the outer wall (5) is provided in a transition region between the other side wall and the outer wall (5), wherein ends (14, 15) of the air pipe element (11) are fastened to the two retaining elements (1 2-13) and the outer wall (5), relative to the inner wall, slopes downwards towards the rear wall (9).

12. A motorcycle comprising a luggage container (1-3) according to any of claims 1 to 11.

## Revendications

1. Réceptacle à bagages (1-3) de moto (1),
le réceptacle à bagages (1-3) comportant des parois, à savoir :
- une paroi intérieure tournée vers la moto (1) lorsque le réceptacle (1-3) est fixé à la moto (1),
- une paroi extérieure (5) écartée de la paroi intérieure,
- une paroi avant (8) tournée vers la zone avant de la moto lorsque le réceptacle est fixé à la moto (1),
- une paroi arrière (9) tournée vers la zone arrière de la moto (1) lorsque le réceptacle à bagages (1-3) est fixé à la moto (1), et
- deux parois latérales (6) qui s'étendent respectivement entre la paroi intérieure et la paroi extérieure (5), et
- un élément de guidage d'air (11) est prévu dans la zone transitoire (10) entre la paroi extérieure (5) et la paroi arrière (9),
**caractérisé en ce que**
l'élément de guidage d'air (11) dirige le vent de circulation passant sur la paroi extérieure (5) dans une direction prédéfinie et cet élément est conçu et disposé de façon à diriger le vent de circulation vers la paroi arrière (9).

2. Réceptacle à bagages (1-3) selon la revendication 1,
**caractérisé en ce que**
la zone transitoire (10) entre la paroi extérieure (5) et la paroi arrière (9), a une courbure convexe.

3. Réceptacle à bagages (1-3) selon la revendication 1 ou 2,
**caractérisé en ce que**
l'élément de guidage d'air (11) se trouve à une certaine distance des segments de paroi (5-9) du réceptacle à bagages (1-3) formant la zone transitoire (10).

4. Réceptacle à bagages (1-3) selon l'une des revendications 1 à 3,
**caractérisé en ce que**
l'élément de guidage d'air (11) a une section en forme de lamelle.

5. Réceptacle à bagages (1-3) selon l'une des revendications 1 à 4,
**caractérisé en ce que**
l'élément de guidage d'air (11) a un côté intérieur en forme de lamelle ou en forme d'aile portante avec une courbure concave, le côté intérieur de la concavité étant tourné vers la zone transitoire (10) du réceptacle à bagages (1-3).

6. Réceptacle à bagages (1-3) selon l'une des revendications 1 à 5,
**caractérisé en ce que**
un premier élément de fixation (12) en saillie de la paroi extérieure (5), est prévu dans la zone transitoire entre l'une des parois latérales (6) et la paroi extérieure (5), et
la zone transitoire entre l'autre paroi latérale et la paroi extérieure (5), comporte un second élément de fixation (13) en saillie de la paroi extérieure (5),
les extrémités (14, 15) de l'élément de guidage d'air (11) sont fixées aux deux éléments de fixation (12-13).

7. Réceptacle à bagages (1-3) selon l'une des revendications 1 à 6,
**caractérisé en ce que**
le réceptacle à bagages est un Topcase (2).

8. Réceptacle à bagages (1-3) selon l'une des revendications 1 à 6,
**caractérisé en ce que**
le réceptacle à bagages est un coffre latéral (3, 4), les parois latérales du réceptacle à bagages formant une paroi supérieure ou une paroi inférieure du coffre latéral.

9. Réceptacle à bagages (1-3) selon l'une des revendications 1 à 8,
**caractérisé en ce que**
la paroi extérieure (5) descend par rapport à la paroi intérieure vers la paroi arrière (9).

10. Réceptacle à bagages (1-3) selon la revendication 9,
**caractérisé en ce que**
la paroi extérieure (5) est en retrait par rapport à la paroi intérieure en descendant vers la paroi arrière (9) suivant un angle de l'ordre de 7° à 15°.

11. Réceptacle à bagages (1-3) de moto (1) selon l'une des revendications 1 à 10,
**caractérisé en ce que**
la zone transitoire entre l'une des parois latérales (6) et la paroi extérieure (5), comporte un premier élément de guidage d'air (12) en saillie de la paroi extérieure (5) et la zone transitoire entre l'autre paroi latérale et la paroi extérieure (5), comporte un second élément de guidage d'air (13) en saillie par rapport à la paroi extérieure (5),
les extrémités (14, 15) de l'élément de guidage d'air (11) sont fixées aux deux éléments de fixation (12-13), et
la paroi extérieure (5) descend par rapport à la paroi intérieure en direction de la paroi arrière (9).

12. Moto équipée d'un réceptacle à bagages (1-3) selon l'une des revendications 1 à 11.
